# EUROPEAN PATENT APPLICATION

(11) **EP 4 694 208 A1**
(43) Date of publication of application: **11.02.2026**
(21) Application number: 24934796.4
(22) Date of filing: 09.10.2024
(51) Int. Cl.: H04R 25/00

(54) **WEARABLE DEVICE**

(30) Priority: 11.04.2024 CN 202410436619
(71) Applicant: Shenzhen Shokzhear Co., Ltd., Shenzhen, Guangdong 518000 (CN)
(72) Inventor: ZHOU, Weihua, Shenzhen, Guangdong 518108 (CN); WANG, Yueqiang, Shenzhen, Guangdong 518108 (CN)
(74) Representative: Wang, Bo
(86) International application number: PCT/CN2024/123773
(87) International publication number: WO 2025/213731

(57) **Abstract**

A wearable device includes a housing assembly and a button assembly. The housing assembly includes a first housing provided with a housing space and a button window. The button assembly includes an operating button provided in the housing space. The operating button is movably connected to an inner wall of the first housing. At least a portion of the operating button protrudes out of the first housing through the button window. By movably connecting the operating button with the inner wall of the first housing, the housing assembly is directly designated as a mounting carrier for the button assembly without using other connecting parts. It's not only conducive to full utilization of the structural space of the housing assembly but also conducive to reducing the configuration number of components, thereby providing support for convenient and quick disassembly and maintenance, and realizing miniaturization and lightweight design of the device.

## Description

### CROSS-REFERENCE TO RELATED APPLICATIONS

The present disclosure claims priority to Chinese Application No. 202410436619.0, filed on April 11, 2024, the entire contents of which are hereby incorporated by reference.

### TECHNICAL FIELD

The present disclosure relates to the technical field of electronic devices, and in particular, to wearable devices.

### BACKGROUND

Electronic devices have become indispensable tools in people's daily lives and work with continuous proliferation thereof, leading to increasingly high demands for performance of the electronic devices. In related technologies, the electronic devices such as in-ear or ear-hanging hearing aids, headphones, etc., comprise a main body that includes an external housing, an internal framework, and a variety of functional components. These functional components are assembled into a unified structure via the internal framework and then encapsulated by the external housing to form a complete electronic device. However, such structural designs often result in large size and heavy weight, which hinders the miniaturization and lightweight design of electronic devices.

### SUMMARY

The main technical problem solved by the present disclosure is to provide a wearable device capable of realizing lightweight and miniaturization.

One embodiment provides a wearable device. The wearable device may include a housing assembly and a button assembly.

The housing assembly may include a first housing, the first housing may be provided with a housing space and a button window, and the button window may be connected to the housing space.

The button assembly may include an operating button, the operating button may be provided in the housing space and movably connected to an inner wall of the first housing, and at least a portion of the operating button may protrude out of the first housing through the button window.

In one embodiment, the wearable device may further include a pivot structure provided between the operating button and the first housing, and the operating button may include a first end and a second end opposite to each other in a radial direction of the pivot structure.

The operating button may rotate about the pivot structure relative to the first housing by an external force to cause one of the first end and the second end of the operating button to protrude out of the first housing through the button window.

In one embodiment, the pivot structure may include a pivot protrusion and a pivot shaft hole, the pivot protrusion may protrude out of one of a surface of the operating button and the inner wall of the first housing, the pivot shaft hole may be provided on another of the surface of the operating button and the inner wall of the first housing, and the pivot protrusion may be rotatably inserted in the pivot shaft hole.

In one embodiment, the wearable device may further include two pivot structures, and in an axial direction of the two pivot structures, the two pivot structures may be provided on two opposite sides of the operating button.

In one embodiment, the first end and the second end of the operating button may be symmetrical about the pivot structure.

In one embodiment, the operating button may be provided with a first limiting structure. The first limiting structure may be configured to abut against the first housing to limit a rotation angle of the operating button.

In one embodiment, the first limiting structure may include a third limiting flange, and the third limiting flange may protrude out of surfaces of two sides of the operating button opposite to each other in an axial direction of the pivot structure.

In one embodiment, the third limiting flange may be located on a side of the pivot structure away from the button window in the radial direction of the pivot structure, and the third limiting flange may extend from a position close to the pivot structure toward a side where the first end and the second end of the operating button are located.

In one embodiment, the first housing may have a first housing wall, a second housing wall, a third housing wall, a fourth housing wall, and a fifth housing wall.

The first housing wall and the second housing wall may be opposite to each other in a first direction. The third housing wall and the fourth housing wall may be opposite to each other in a third direction and connected between the first housing wall and the second housing wall. The fifth housing wall may be connected with an end of the first housing wall, an end of the second housing wall, the third housing wall, and an end of the fourth housing wall in a second direction to enclose the housing space of the first housing. Any two of the first direction, the second direction, and the third direction may intersect.

The button window may be provided through the fifth housing wall, and the pivot structure may be provided between the operating button and the third housing wall and/or between the operating button and the fourth housing wall along the third direction.

In one embodiment, the wearable device may further include a control board assembly located in the housing space. The control board assembly may be located on a side of the button assembly away from the button window in the second direction, and the first end and/or the second end of the operating button may be configured to press the control board assembly to input a preset command.

In one embodiment, the control board assembly may include a second circuit board, a first switch, and a second switch. The second circuit board and the operating button may be opposite to each other, and the first switch and the second switch may be provided on a side of the second circuit board facing the operating button.

When the operating button rotates around the pivot structure in a first preset direction, the first end of the operating button may press the first switch. When the operating button rotates around the pivot structure in a second preset direction that is opposite to the first preset direction, the second end of the operating button may press the second switch.

In one embodiment, the first housing may be provided with a first fixing structure on the inner wall of the first housing. The first fixing structure may be fixedly connected to the second circuit board to limit and fix the control board assembly to the side of the button assembly away from the button window.

In one embodiment, the first fixing structure may include a support post protruding out of an inner wall of the fifth housing wall, and a position of the second circuit board corresponding to the support post may be provided with a positioning through-hole. The support post may penetrate the positioning through-hole and may be fixed to the second circuit board to maintain a preset distance between the inner wall of the fifth housing wall and the second circuit board in the second direction.

In one embodiment, an outer wall of the fifth housing wall may be a curved structure protruding towards an outer side of the first housing in the second direction, and the first end and the second end of the operating button may be two ends of the operating button that are opposite to each other in the first direction.

In one embodiment, the first end or the second end of the operating button may be provided with a button protrusion protruding out of the first housing via the button window.

In one embodiment, the housing assembly may further include a second housing. The first housing may be connected to the second housing to enclose the housing space into an accommodating cavity that at least accommodates the button assembly, and one or more of the first housing, the second housing, and the operating button may be a one-piece structure made of polyimide.

In one embodiment, the housing assembly may include a first end and a second end that are opposite to each other. A second fixing structure and a first positioning structure may be provided between the first housing and the second housing, the second fixing structure may be located on the first end of the housing assembly, and the first positioning structure may be located on the second end of the housing assembly.

The second fixing structure may include a support arm and a fixing pin, one of the first housing and the second housing may be of a one-piece structure with the support arm, and the fixing pin may be provided through another of the first housing and the second housing.

The first positioning structure may include a first positioning protrusion and a first positioning groove. One of the first housing and the second housing may be of a one-piece structure with the first positioning protrusion, the first positioning groove may be provided in another of the first housing and the second housing, and the first positioning protrusion may be aligned and inserted in the first positioning groove to limit a relative position of the first housing and the second housing.

In one embodiment, the wearable device may further include an in-ear speaker. The in-ear speaker may include a speaker assembly and a wearable assembly, and the wearable assembly may be connected between the housing assembly and the speaker assembly.

The housing assembly may be worn between a dorsal side of an ear of a user and the head of the user, and the speaker assembly is capable of being inserted within an ear canal of the user.

In one embodiment, the wearable device may be an air-conduction hearing aid.

The wearable device, according to the above-described embodiment, includes a housing assembly and a button assembly. The housing assembly includes the first housing provided with the housing space and the button window, and the button assembly includes an operating button provided in the housing space and movably connected to an inner wall of the first housing, and at least a portion of the operating button protrudes out of the first housing through the button window. By movably connecting the operating button with the inner wall of the first housing, the housing assembly may be directly designated as a mounting carrier for the button assembly without the aid of other connecting parts. This is not only conducive to the full utilization of the structural space of the housing assembly but also conducive to reducing the configuration number of components, thereby providing support for convenient and quick disassembly and maintenance of the device, and realizing miniaturization and lightweight design of the device.

### BRIEF DESCRIPTION OF THE DRAWINGS

FIG. 1 is a schematic diagram illustrating an exemplary wearable device according to an embodiment of the present disclosure;
FIG. 2 is a schematic diagram illustrating a cross-sectional structure (I) of a wearable device according to an embodiment of the present disclosure;
FIG. 3 is a schematic diagram illustrating a structural decomposition of a wearable device according to an embodiment of the present disclosure;
FIG. 4 shows a schematic diagram illustrating a cross-sectional structure (II) of a wearable device according to an embodiment of the present disclosure;
FIG. 5 is a schematic diagram illustrating a structural decomposition of a housing assembly of a wearable device according to an embodiment of the present disclosure;
FIG. 6 is a schematic diagram illustrating an exemplary second housing of a wearable device according to an embodiment of the present disclosure;
FIG. 7 is a schematic diagram illustrating an exemplary first housing of a wearable device according to an embodiment of the present disclosure;
FIG. 8 is a schematic diagram illustrating a structural arrangement relationship of a first assembly of a wearable device according to an embodiment of the present disclosure;
FIG. 9 is a schematic diagram illustrating a structural decomposition of a first assembly of a wearable device according to an embodiment of the present disclosure; and
FIG. 10 is a schematic diagram illustrating a structural relationship between a button assembly and a control board assembly of a wearable device according to an embodiment of the present disclosure.

### Reference signs:

100, housing assembly; 100a, a accommodating cavity; 110, first housing; 110a, first housing wall; 110b, second housing wall; 110c, third housing wall; 110d, fourth housing wall; 110e, fifth housing wall; 110f, sound pickup hole; 110g, button window; 120, second housing; 120a, sixth housing wall; 120b, seventh housing wall; 120c, eighth housing wall; 120d, ninth housing wall; 120e, tenth housing wall; 120f, first connection port; 120g, second connection port; 120h, battery window;
131, support arm; 132, fixing pin; 141, first positioning protrusion; 142, first positioning groove; 161, support post; 171, first limiting flange; 172, second limiting flange; 173, second avoidance notch; 181, pivot protrusion;
200, control board assembly; 210, second circuit board; 210a, positioning through-hole; 220, first switch; 230, second switch; 300, microphone assembly; 400, button assembly; 410, operating button; 420, pivot groove; 430, third limiting flange; 440, button protrusion; 500, first interface assembly; 600, second interface assembly; 700, battery assembly; 810, speaker assembly; 820, wearable assembly.

### DETAILED DESCRIPTION

The present disclosure is described in further detail below by way of specific embodiments in conjunction with the accompanying drawings. Similar components in different embodiments adopt associated similar component labeling. In the following embodiments, many of the details are described to enable the present disclosure to be better understood. However, a person skilled in art may have no trouble recognizing that some of these features can be omitted in various embodiments or can be replaced by other components, materials, or methods. In some cases, some of the operations related to the present disclosure are not shown or described in the present disclosure, to avoid the core of the present disclosure from being overwhelmed by an excessive amount of description. To a person skilled in the art, the detailed description of these related operations is not necessary, and they can fully understand the related operations according to the description in the present disclosure and the general technical knowledge in the field.

In addition, the features, operations, or characteristics described in the present disclosure may be combined in any appropriate manner to form various embodiments. Meanwhile, various steps or actions in the description of the method may be switched or adjusted in order in a manner that would be apparent to a person skilled in the art. The various sequences in the present disclosure and the accompanying drawings are therefore only intended to clearly describe a particular embodiment, and do not purport to be a required sequence unless otherwise indicated that one of the sequences must be followed.

The serial numbers themselves, such as "first," "second", etc., are used herein for the purpose of distinguishing only the objects described and have no sequential or technical meaning. The terms "connection," and "coupling" in the present disclosure include direct and indirect connections (couplings) unless otherwise specified.

In the present disclosure, the in-ear hearing aid is mainly used as an example to describe the wearable device provided by the embodiments of the present disclosure. It is to be noted that the in-ear hearing aid is only a specific embodiment of the practical application of the wearable device, and the wearable device may also be other types of hearing aids, headphones, glasses, and other devices.

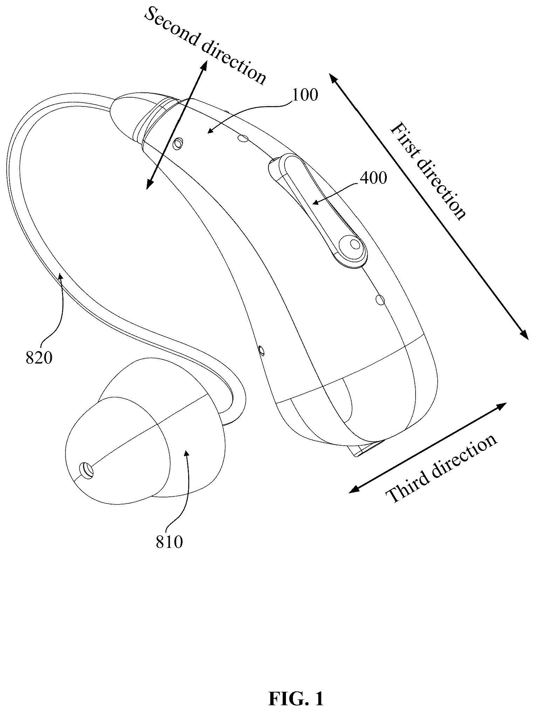

Referring to FIG. 1, the wearable device includes a housing assembly 100, a movement assembly, a speaker apparatus, and other functional components as needed.

The movement assembly may be understood as a collection of related components for realizing main functions of the wearable device. For example, the movement assembly is configured to acquire a sound signal, convert and process an electrical signal, switch on and off the wearable device, adjust a volume, supply power, etc. The movement assembly is provided in the housing assembly 100 to be built in combination with the housing assembly 100 to form a complete functional structural body. In order to facilitate differentiation and description, a combined structure of the housing assembly 100 and the movement assembly is defined as a main body of the wearable device.

The speaker apparatus may be understood as a collection of related components that realize a function of playing the sound signal of the wearable device. In some embodiments, the speaker apparatus is connected with the main body of the wearable device. For example, the speaker apparatus is connected to an exterior of the housing assembly 100.

Exemplarily, referring to FIG. 1, the speaker apparatus is an in-ear speaker including a speaker assembly 810 and a wearable assembly 820. The speaker assembly 810 is provided in the form of a structure that can be adaptably inserted into the ear canal of a user and mainly serves to play sound to the user. The wearable assembly 820 is connected between the speaker assembly 810 and the housing assembly 100 by electrically connecting the speaker assembly 810 and the movement assembly, and is mainly configured to establish a signaling connection relationship between the movement assembly and the speaker assembly 810.

The wearable assembly 820 may be made of a flexible cable with a signaling function, or the wearable assembly 820 may be made of other wires with both a signaling function and a shape memory function. One end of the wearable assembly 820 is fixed and electrically connected to the speaker assembly 810, and the other end of the wearable assembly 820 may be connected to the housing assembly 100 in a removable or non-removable manner and electrically connected to the movement assembly.

With the help of the wearing component 820, the main body of the wearable device may also be stably worn in the ear of the user, and the speaker assembly 810 may be inserted into the ear canal of the user. The main body of the wearable device (specifically, the movement assembly) may collect an external sound signal. By converting the sound signal into an electrical signal and outputting the electrical signal to the speaker assembly 810, the speaker assembly 810 may be used to play a corresponding sound signal, to realize the hearing aid function of the wearable device.

In some other embodiments, the speaker apparatus may also be configured in other forms in the wearable device (e.g., with reference to the movement assembly being directly provided in an interior or exterior of the housing assembly 100) to form a wearable device having different structural forms or different functions. In other words, by selectively configuring the speaker apparatus, the main body of the wearable device, and the structural relationship between the speaker apparatus and the main body , other structural forms of hearing aids or other types of wearable devices, such as headphones or eyeglasses, may also be constructed.

It is to be understood that when the wearable device is in an energized state, it is possible to realize the conversion between the sound signal (e.g., a mechanical vibration signal) and the electrical signal through the cooperation of the movement assembly and the speaker apparatus to facilitate the user to hear the sound through the ear. Generally speaking, the mechanical vibration is air conduction-based and acts on a tympanic membrane of the user mainly through the air as a medium, and then acts on an auditory nerve. The mechanical vibration is also bone conduction-based and acts directly on the auditory nerve through the user's bones and tissues as a medium. For the sound heard by the user, the former may be referred to as "air-conducted sound", and the latter may be abbreviated as "bone-conducted sound".

Based on this, by selecting and configuring the specific functional structures of the movement assembly and the speaker apparatus, the wearable device may form both the air-conducted sound and the bone-conducted sound, and may also realize both the air-conducted sound and the bone-conducted sound.

For more clear and detailed description of the structural configuration of the main body of the wearable device, based on an outer contour form of the main body of the wearable device, three directions (e.g., a first direction, a second direction, and a third direction) intersecting or perpendicular to each other are defined herein.

Exemplarily, when the wearable device is in a naturally placed state, the first direction refers to a length direction of the whole wearable device, the second direction refers to a thickness direction of the whole wearable device, and the third direction refers to a width direction of the whole wearable device.

Exemplarily, in a state in which the wearable device is normally worn between a dorsal side of the ear and the head, with the user as a reference frame, the first direction refers to an up-down direction of the user, the second direction refers to a front-back direction of the user, and the third direction refers to a left-right direction of the user.

In one embodiment, referring to FIGs. 1 to 7, the housing assembly 100 includes a first housing 110 and a second housing 120. The first housing 110 and the second housing 120 are opposite to each other and cooperatively connected to each other to form a accommodating cavity 100a in the interior of the housing assembly 100 (or between the first housing 110 and the second housing 120). The movement assembly is arranged within the accommodating cavity 100a. At least a portion of the movement assembly 100 is connected to the first housing 110, and at least another portion of the movement assembly 100 is connected to the second housing 120.

Exemplarily, the movement assembly includes a control board assembly 200, a microphone assembly 300, a button assembly 400, a first interface assembly 500, a second interface assembly 600, and a battery assembly 700. For ease of distinguishing and describing, the movement assembly in which the functional member connected to the first housing 110 is defined as a first assembly, and the functional member connected to the second housing 120 in the movement assembly is defined as a second assembly. The first assembly may include the control board assembly 200, the microphone assembly 300, and the button assembly 400. The second assembly may include the first interface assembly 500, the second interface assembly 600, and the battery assembly 700.

The microphone assembly 300 is electrically connected to the control board assembly 200 and fixed to the first housing 110, respectively. The microphone assembly 300 is mainly configured to collect the sound signal outside the wearable device (specifically outside the housing assembly 100). For example, the mechanical vibration of the relevant parts of the microphone assembly 300 is triggered due to a sound of an external environment, thus enabling the microphone assembly 300 to realize the acquisition of the sound signal.

The control board assembly 200 mainly plays a role in regulating and managing the wearable device. For example, the control board assembly 200 may receive the sound signal collected by the microphone assembly 300, and then convert the sound signal into an electrical signal to be output to the speaker apparatus (specifically, the speaker assembly 810), to play the sound signal to the user with the aid of the speaker apparatus.

The button assembly 400 is movably connected to the first housing 110 and cooperatively arranged with the control board assembly 200. Through the cooperation between the button assembly 400 and the control board assembly 200, input of a preset command may be realized. For example, through the button assembly 400, a command for controlling the wearable device to turn on and off, a command for volume adjustment, or other commands to the control board assembly 200 may be input.

The first interface assembly 500, the second interface assembly 600, and the battery assembly 700 are connected to the second housing 120 and electrically connected to the control board assembly 200 (e.g., in an electrical signal connection relationship with the control board assembly 200 via a wire assembly). The first interface assembly 500 primarily serves to connect the speaker apparatus in the main body of the wearable device. For example, the first interface assembly 500 may be detachably connected to the wearable assembly 820 in a pluggable manner, thereby establishing a signal connection relationship between the speaker assembly 810 and the control board assembly 200 so that the speaker assembly 810 can generate or play a sound signal in response to the electrical signal provided by the control board assembly 200.

The second interface assembly 600 is mainly configured to connect an external regulating device (e.g., a cell phone, a computer, etc.) to perform data transmission between the external regulating device and the wearable device. Exemplarily, a working mode, working parameters, a volume level, etc., of the wearable device may be adaptively adjusted according to the user's needs by the external regulating device. The battery assembly 700 is primarily configured to power the electricity-using components in the wearable device in order to provide support for the normal operation of the wearable device.

In some embodiments, other functional components may be added to the movement assembly, or some of the functional components may be omitted. For example, by omitting the first interface component 500, the speaker assembly 810 may be directly connected to the control board assembly 200 through the wearable component 820. As another example, the second interface assembly 600 is replaced with a wireless communication module, with the aid of which data is transmitted between the wearable device and the external regulating device.

In other words, the movement assembly may include one or more of the control board assembly 200, the microphone assembly 300, the button assembly 400, the first interface assembly 500, the second interface assembly 600, and the battery component 700.

In some embodiments, based on the form of the structure inside the housing assembly 100, the functional components in the first assembly and the second assembly may also be set up interchangeably with each other. For example, the first interface component 500 is subordinate to the first assembly and is connected to the first housing 110

That is to say, the control board assembly 200, the microphone assembly 300, the button assembly 400, the first interface assembly 500, the second interface assembly 600, and the battery assembly 700, etc., may be selectively configured in in either the first housing 110 or the second housing 120 according to the structure, layout, and functional configuration of the housing assembly 100 or the main body of the wearable device.

It should be noted that the description of the "wire assembly" is introduced herein, and the wire assembly may be a wire, a row of wires, a flexible circuit board (a flexible printed circuit (FPC)), etc., to adapt to the internal structure of the housing assembly 100 and the spatial arrangement relationship between the relevant functional components, thereby flexibly establishing electrical connections among these functional components.

Based on this, with the first housing 110 and the second housing 120 serving as mounting carriers for a plurality of functional components within the wearable device, the movement assembly may be dispersedly provided in different parts of the housing assembly 100.

On the one hand, compared to the related technology, which adopts an internal skeleton independent of the housing assembly 100 as a mounting carrier for the movement assembly, the present disclosure may realize the full utilization of the structure and space of the housing and reduce the number of components inside the device, thereby facilitating the miniaturization and lightweight design of the wearable device.

On the other hand, based on the structural form of the decentralized installation of the movement assembly, the wearable device is quickly disassembled and assembled. And also, by disassembling and assembling the first housing 110 and the second housing 120, the first assembly and the second assembly may be disassembled, assembled, maintained, recycled and reused, etc., in a targeted manner.

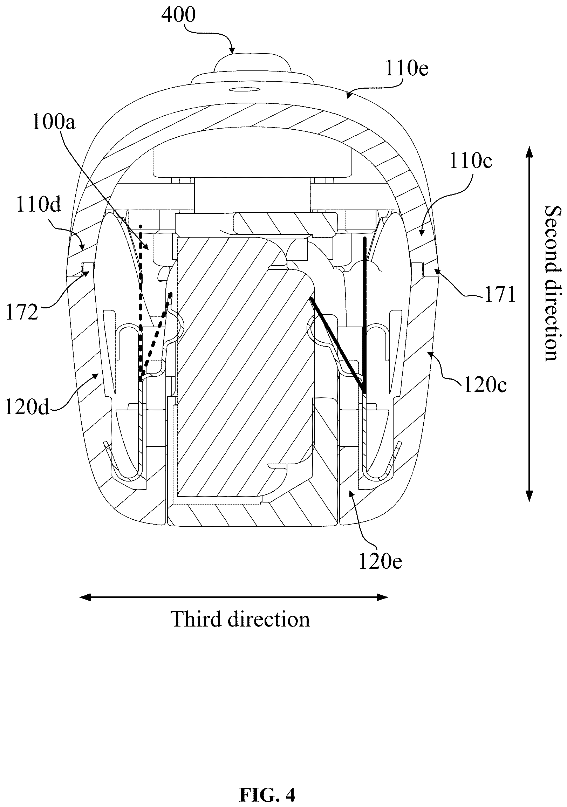

In one embodiment, referring to FIG. 4-FIG. 7, both the first housing 110 and the second housing 120 have housing structures with openings. The first housing 110 and the second housing 120 are cooperatively connected in the second direction with the openings opposite each other to form the accommodating cavity 100a.

In the case of the movement assembly, the first assembly (e.g., the control board assembly 200, the microphone assembly 300, the button assembly 400, etc.) is connected to an inner wall of the first housing 110 such that at least a portion of the first assembly is accommodated within the housing space of the first housing 110. The second assembly (e.g., the first interface assembly 500, the second interface assembly 600, the battery assembly 700, etc.) is connected to an inner wall of the second housing 120 such that at least a portion of the second assembly is accommodated within the housing space of the second housing 120.

Firstly, by connecting the first assembly to the inner wall of the first housing 110 and the second assembly to the inner wall of the second housing 120, it is possible to prevent the connecting structure between the movement assembly and the housing assembly 100 from being exposed in the housing assembly 100 and cause damage to the appearance of the main body of the wearable device, enhancing the aesthetic appearance of the main body of the wearable device, as well as the wearability.

Secondly, utilizing the housing space of the first housing 110 and the second housing 120 to accommodate the first assembly and the second assembly provides a certain protective effect, preventing the first assembly or the second assembly from being damaged due to bumping before assembling and molding the housing assembly 100.

Thirdly, by setting the first housing 110 and the second housing 120 as a housing structure with a certain volume space and an opening, it is convenient to assemble and mold the first housing 110 with the first assembly and the second housing 120 with the second assembly, respectively. The assembly of the main body of the wearable device may be easily and quickly completed after the wiring of the wire assembly is completed.

In some embodiments, the first housing 110 may be of a housing structure with an opening, and the second housing 120 may be of a cover structure. The second housing 120 is provided in the first housing 110 by sealing the opening of the first housing 110 to enclose the accommodating cavity 100a with the first housing 110. With respect to the movement assembly, the first assembly is connected to the inner wall of the first housing 110 and is accommodated in the housing space of the first housing 110. The second assembly is connected to the side of the second housing 120 that faces the first housing 110. The second assembly is equivalent to being accommodated in the housing space (e.g., the accommodating cavity 100a) of the first housing 110 after the combination of the first housing 110 and the second housing 120. Certainly, the first housing 110 may adopt a cover structure, while the second housing 120 adopts a housing structure with an opening.

Therefore, the housing assembly 100 is formed by the combination of the housing structure and the cover structure, which is not only conducive to realizing the rapid assembly of the main body of the wearable device, but also allows for the formation of different structural forms or assembling modes of the wearable device, thereby satisfying different application requirements.

In one embodiment, referring to FIGs. 4-7, an assembly structure is provided between the first housing 110 and the second housing 120. The assembly structure is mainly configured to fix the first housing 110 that is provided with the first assembly and the second housing 120 that is provided with the second assembly into a single unit, so as to roughly form a complete outer contour structure of the main body of the wearable device (e.g., the housing assembly 100). Thus, with the help of the housing assembly 100, the wearable device or the main body of the wearable device may be moved, carried, worn, operated, and used.

The assembly structure may adopt different structures according to the connection form between the first housing 110 and the second housing 120. For example, the assembly structure may be a relevant structure adapted to realize the connection form, such as gluing, welding, etc., between the first housing 110 and the second housing 120. As another example, the assembly structure may be a structure suitable for realizing a detachable connection, such as snap-fit, lock-fit, or the like, between the first housing 110 and the second housing 120.

Exemplarily, referring to FIG. 4 to FIG. 7, the assembly structure includes a second fixing structure and a first positioning structure. The second fixing structure is mainly configured to fix the first housing 110 and the second housing 120 firmly into a single unit. The first positioning structure is mainly configured to locate the relative position between the first housing 110 and the second housing 120, to provide support for fast and accurate assembly of the first housing 110 and the second housing 120, and at the same time to enhance the structural combination strength between the first housing 110 and the second housing 120 in conjunction with the second fixing structure.

The second fixing structure includes a support arm 131 and a fixing pin 132. The support arm 131 protrudes out of an inner wall surface of the second housing 120. For example, the support arm 131 is of a one-piece structure with the second housing 120. The fixing pin 132 cooperates with the support arm 131.

The first positioning structure includes a first positioning protrusion 141 and a first positioning groove 142. The first positioning protrusion 141 protrudes out of the inner wall surface of the first housing 110, and the first positioning protrusion 141 and the first housing 110 are a one-piece structure. The first positioning groove 142 is integrally formed at a position of the second housing 120 corresponding to the first positioning protrusion 141.

In the process of assembling the first housing 110 and the second housing 120 to form the housing assembly 100, the first positioning protrusion 141 may be inserted into the first positioning groove 142 in advance by means of an alignment relationship between the first positioning protrusion 141 and the first positioning groove 142, so that the relative positions of the first housing 110 and the second housing 120 are defined. For example, an end surface of the opening of the first housing 110 abuts against an end surface of the opening of the second housing 120, so that the first space and the second space are connected to form the accommodating cavity 100a (at this time, the support arm 131 is located in the accommodating cavity 100a).

Afterwards, the fixing pin 132 is threaded into the interior of the housing assembly 100 from the exterior of the housing assembly 100 through the position of the first housing 110 corresponding to the support arm 131 (e.g., a pin hole structure may be provided at the position of the first housing 110 corresponding to the support arm 131), so as to thread and fix the first housing 110 and the support arm 131 into a single unit, ultimately realizing the detachable assembly fixing between the first housing 110 and the second housing 120.

In some embodiments, the support arm 131 and the fixing pin 132, the first positioning protrusion 141, and the first positioning groove 142 may also be positionally switched. For example, the support arm 131 protrudes out of the inner wall of the first housing 110, and the first positioning protrusion 141 protrudes out of the inner wall of the second housing 120.

With the cooperation of the second fixing structure and the first positioning structure, the assembly and fixing of the first housing 110 and the second housing 120 may be realized easily, quickly and accurately, to effectively enhance the structural solidity of the housing assembly 100 (or the outer shell of the device), and also to provide structural support for the disassembling and assembling of the main body of the wearable device or the housing assembly 100.

For example, in the process of assembling the main body of the wearable device or the housing assembly 100, the first positioning protrusion 141 may be first inserted into the corresponding first positioning groove 142, and the fixing pin 132 is then inserted using a cooperation relationship between the support arm 131 and the fixing pin 132, to finally assemble and fix the first housing 110 and the second housing 120 to form the housing assembly 100. In this way, the accuracy of the combination of the first housing 110 and the second housing 120 may be ensured.

For example, when the main body of the wearable device needs to be disassembled and maintained, only the fixing pin 132 needs to be withdrawn to realize the disassembly of the housing assembly 100, so as to inspect and maintain the internal structure of the main body of the wearable device and the related components.

In some embodiments, the second fixing structure and the first positioning structure may also be of other structural forms.

For example, a plurality of snap structures that cooperate with each other are provided on the first housing 110 and the second housing 120, and the snap structures are utilized to replace the second fixing structure and the first positioning structure to realize the assembly and fixing of the first housing 110 and the second housing 120.

As another example, a convex shaft structure is provided on a position on the inner wall of the first housing 110 corresponding to the support arm 131, and a pin hole structure is provided on the support arm 131 for the insertion and embedding of the convex shaft structure, so that the second fixing structure is formed through the cooperation of the convex shaft structure and the pin hole structure. Therefore, with the cooperation of the first positioning structure, the first housing 110 and the second housing 120 are located and fixed at different positions and in different directions.

In some embodiments, the second fixing structure may be omitted, and the first housing 110 and the second housing 120 may be pre-located by setting one or more first positioning structures, then the first housing 110 and the second housing 120 may be fixed by gluing, welding, or the like.

Certainly, it is also possible to omit the first positioning structure. The first housing 110 and the second housing 120 are fixed and connected from a plurality of different positions by providing a plurality of sets of support arms 131 and fixing pins 132. For these and other reasons, they will not be elaborated further here.

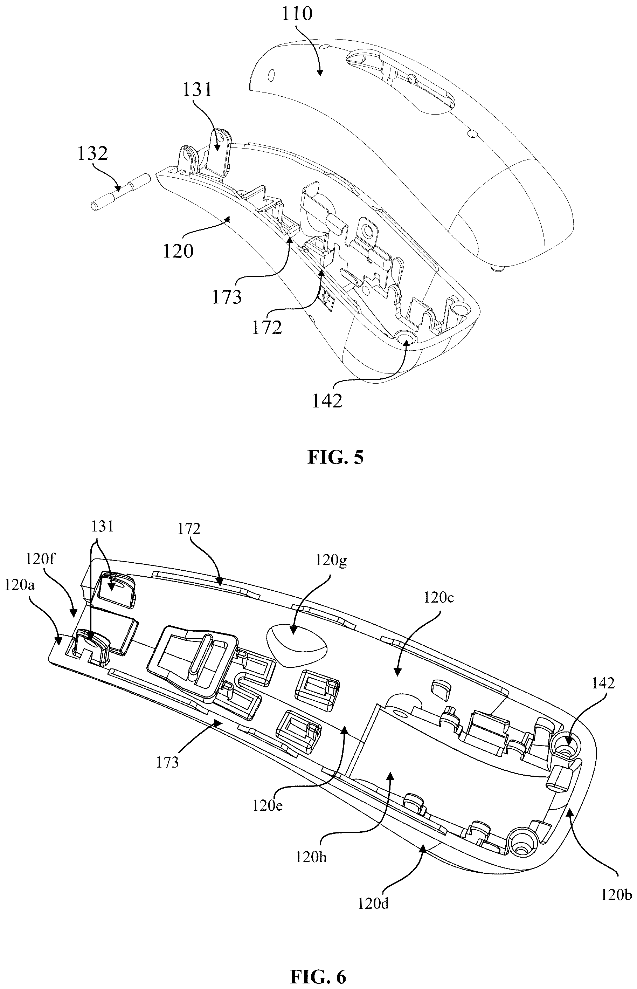

In one embodiment, referring to FIG. 4 and FIG. 5, the first housing 110 and the second housing 120 are opposite to each other and cooperatively connected to each other in the second direction to form the housing assembly 100, and the second fixing structure and the first positioning structure are provided on two ends of the housing assembly 100 that are opposite to each other in the first direction. For the convenience of description, the two ends of the housing assembly 100 that are opposite to each other in the first direction or the length direction may be defined as a first end and a second end of the housing assembly 100. When the wearable device is in a normally worn state, the first end of the housing assembly 100 may be a top end of the housing assembly 100, and the second end of the housing assembly 100 may be a bottom end of the housing assembly 100. The second fixing structure is provided at the first end of the housing assembly 100, and the first positioning structure is provided at the second end of the housing assembly 100.

By providing the second fixing structure and the first positioning structure at the two ends of the housing assembly 100 that are opposite to each other, the first housing 110 and the second housing 120 may be located and fitted together with the help of the first positioning structure in advance during the assembly process, and then the first housing 110 and the second housing 120 may be fixed with the help of the cooperation relationship between the fixing pin 132 and the support arm 131. In this way, it is conducive to the assemblers to quickly and accurately identify the assembly direction of the first housing 110 and the second housing 120 and to improve the efficiency of assembling the housing assembly 100 or the main body of the wearable device. Meanwhile, it is also convenient to inspect and maintain the housing assembly 100 and the related functional components by dismantling the housing assembly 100.

In some embodiments, the control board assembly 200, the microphone assembly 300, the button assembly 400, or the like are connected to the inner wall of the first housing 110. The first interface assembly 500, the second interface assembly 600, the battery assembly 700, or the like are connected to the inner wall of the second housing 120. The first housing 110 and the second housing 120 are both of a housing structure. The support arm 131 protrudes out of the inner wall of the second housing 120 substantially along the second direction toward a side where the first housing 110 is located. The fixing pin 132 is arranged through the first housing 110 and the support arm 131 substantially along the third direction. Accordingly, the first positioning protrusion 141 protrudes out of the inner wall or the end surface of the opening of the second housing 120 substantially in the second direction toward the side where the second housing 120 is located.

Therefore, based on the differentiated setting of the arrangement direction of the support arm 131 and the first positioning protrusion 141, the combination of the second housing 120 and the second assembly may be regarded as the main body for installation. This guides assemblers to quickly and accurately assemble the combination of the first housing 110 and the first assembly into the first housing 110 on the main body for installation.

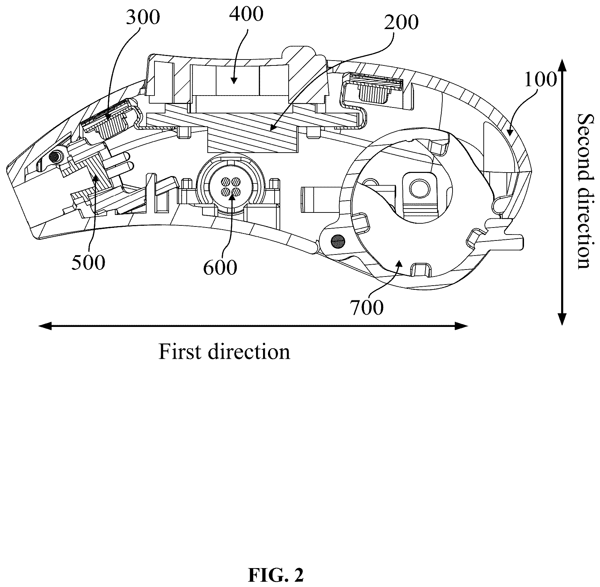

In one embodiment, referring to FIG. 2-FIG. 5, the first housing 110 and the second housing 120 adopts a housing structure, and the movement assembly includes a control board assembly 200, a microphone assembly 300, a button assembly 400, a first interface assembly 500, a second interface assembly 600, and a battery assembly 700.

For ease of differentiation and description, two housing walls of the first housing 110 that are opposite to each other in the first direction are defined as a first housing wall 110a and a second housing wall 110b, two housing walls that are opposite to each other in the third direction are defined as a third housing wall 110c and a fourth housing wall 110d, and a housing wall that is connected between the first housing wall 110a, the second housing wall 110b, the third housing wall 110c, and the fourth housing wall 110d in the second direction is defined as a fifth housing wall 110e. Two housing walls of the second housing 120 that are opposite to each other in the first direction are defined as a sixth housing wall 120a and a seventh housing wall 120b, two housing walls that are opposite to each other in the third direction are defined as an eighth housing wall 120c and a ninth housing wall 120d, and a housing wall that is connected between the sixth housing wall 120a, the seventh housing wall 120b, the eighth housing wall 120c, and the ninth housing wall 120d in the second direction is defined as a tenth housing wall 120e.

The combination of the first housing wall 110a and the sixth housing wall 120a forms a first side wall of the housing assembly 100, and the combination of the second housing wall 110b and the seventh housing wall 120b forms a second side wall of the housing assembly 100. The fifth housing wall 110e and the tenth housing wall 120e may be understood to be a third side wall and a fourth side wall of the housing assembly 100 that are opposite to each other in the second direction. The combination of the third housing wall 110c and the eighth housing wall 120c forms a fifth side wall of the housing assembly 100, and the combination of the fourth housing wall 110d and the ninth housing wall 120d forms a sixth side wall of the housing assembly 100. It will be appreciated that the first side wall, the second side wall, the third side wall, the fourth side wall, the fifth side wall, and the sixth side wall of the housing assembly 100 are connected to enclose the accommodating cavity 100a.

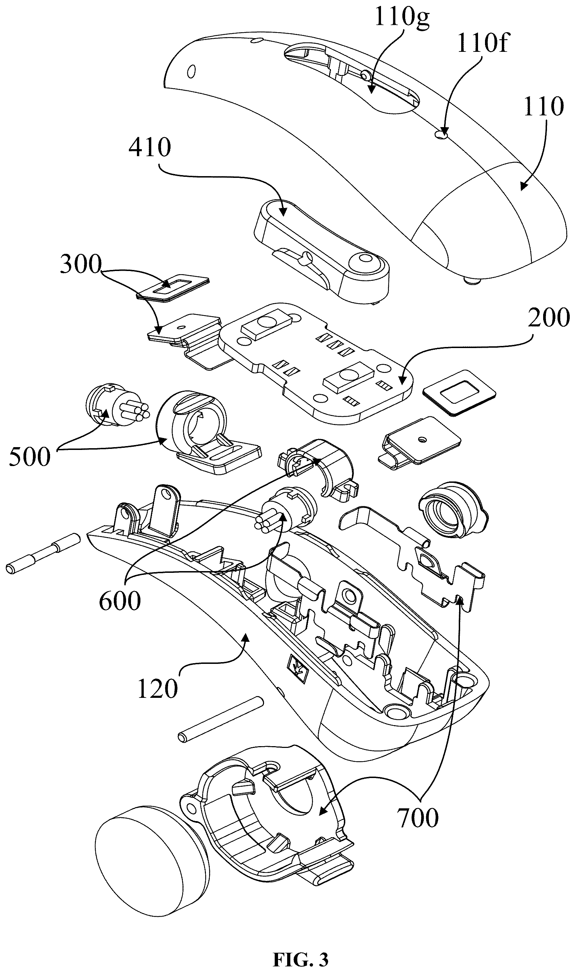

Referring to FIGs. 2 and 3, the control board assembly 200 is provided in the interior of the housing assembly 100 (e.g., fixedly connected to the third side wall (e.g., the fifth housing wall 110e)). The microphone assembly 300, which may be a collection of related functional components capable of forming an air-conducted sound, is fixedly provided on the third side wall, and maintains an air path connection with the exterior of the housing assembly 100 at the third side wall.

Exemplarily, a sound pickup hole 110f may be provided through the position on the third side wall (e.g., the fifth housing wall 110e) corresponding to the microphone assembly 300, and the sound pickup hole 110f is connected to the microphone assembly 300. The external sound signal is conducted to the microphone assembly 300 using air as a medium to cause the microphone assembly 300 to realize the acquisition of the sound signal by generating mechanical vibration.

Exemplarily, a sound conduit line may also be provided within the accommodating cavity 100a, and the microphone assembly 300 is connected to the exterior of the housing assembly 100 via the sound conduit line to enable the acquisition of the sound signal.

Referring to FIGs. 2 and 3, the button assembly 400 is provided in the accommodating cavity 100a in the form of a movable connection (e.g., a rotational connection, a sliding connection, etc.) with the inner wall of the first housing 110, and the button assembly 400 is at least partially exposed to the third side wall.

For example, the button assembly 400 is arranged on a side of the control board assembly 200 facing the third side wall in the second direction, a button window 110g is provided through a position of the third side wall corresponding to the button assembly 400, and the button assembly 400 is exposed and protrudes out of the button window 110g.

By applying a pressing force toward the control board assembly 200 to the button assembly 400, the button assembly 400 may be induced to press button switches on the control board assembly 200 to realize the input of the preset command. Certainly, the button assembly 400 may also include a switching component capable of generating an electrical signal, the button assembly 400 is electrically connected to the control board assembly 200, and the command information is input to the control board assembly 200 by triggering the button assembly 400.

Referring to FIGs. 2 and 6, the first interface assembly 500 is fixedly connected to the second housing 120 (e.g., fixed to the fourth side wall) by at least partially exposing to the first side wall and is arranged in the accommodating cavity 100a. Exemplarily, a first connection port 120f may be provided through the first side wall, and an interface end of the first interface assembly 500 may be directly opposite the first connection port 120f. The interface end of the first interface assembly 500 may extend into the first connection port 120f and may also extend out of the housing assembly 100 from the first connection port 120f.

Accordingly, an interface structure capable of being in pluggable adaptive connection with the first interface assembly 500 may be provided on the speaker apparatus (specifically, at the end of the wearable assembly 820 away from the speaker assembly 810). The interface structure and the first interface assembly 500 are used to fix the speaker apparatus to the main body of the wearable device to realize an electrical connection between the speaker apparatus and the movement assembly (e.g., the control board assembly 200).

Referring to FIGs. 2 and 6, the second interface assembly 600 is fixedly connected to the second housing 120 (e.g., fixed to the fourth side wall) by at least partially exposing to the fifth side wall and is arranged within the accommodating cavity 100a. Exemplarily, the second connection port 120g may be provided through the fifth side wall (e.g., the eighth housing wall 120c), the interface end of the second interface assembly 600 may be arranged opposite the second connection port 120g, and the interface end of the second interface assembly 600 may also extend into the second connection port 120g. When applying the wearable device, the second interface assembly 600 may be utilized to connect to an external regulating device such as a cell phone, a computer, or the like, in order to make adaptive adjustments to the working mode, the working parameters, or the like of the wearable device according to the user's needs.

Referring to FIG. 2 to FIG. 4, and FIG. 6, the battery assembly 700 may be fixedly connected to the second housing 120 or movably connected to the second housing 120. Exemplarily, the battery window 120h may be provided in a region where the second side wall meets the fourth side wall, and the battery assembly 700 is rotatably connected to the second housing 120, so that the battery assembly 700 may enter and exit the accommodating cavity 100a through the battery window 120h by rotating the battery assembly 700, which facilitates battery replacement.

Based on this, by dispersing the various parts of the movement assembly in different positions or different directions of the housing assembly 100, not only the structure and space of the housing assembly 100 is utilized reasonably to ensure the performance of the wearable device, but also the operation of the wearable device is facilitated.

For example, by arranging the first interface assembly 500 and the battery assembly 700 at two opposite ends of the main body of the wearable device in the first direction, and arranging the button assembly 400 in a position between the first interface assembly 500 and the battery assembly 700 in the first direction, on the one hand, it is not only convenient to connect the speaker apparatus (e.g., the wearable component 820) via the first interface assembly 500, but also convenient to replace the battery in the battery assembly 700. On the other hand, when the device is in a worn state, the button assembly 400 may be located at a position substantially in the middle of the rear side or at a position at the lower rear side of the main body of the wearable device, which not only facilitates operation of the button assembly 400, but also avoids structural interference of the first interface assembly 500 and the battery assembly 700 with the button assembly 400.

As another example, by setting the third side wall in the form of a curved surface structure and arranging the two microphone assemblies 300 on two opposite sides of the button assembly 400 or the control board assembly 200 in the first direction, the sound pickup holes 110f corresponding to the two microphone assemblies 300 may be made to face different directions, ensuring the effect of the microphone assemblies 300 on the acquisition of the sound signal.

In some embodiments, when the wearable device is in a normally worn state, such as a state in which the main body of the wearable device relies on the wearable assembly 820 to be suspended on the dorsal side of the ear of the user, and the speaker assembly 810 is inserted into the ear canal of the user.

The first side wall is a side wall facing the front side of the user in the first direction, the second side wall is a side wall facing the lower side of the ear of the user in the first direction, and the third side wall is a side wall back away from area region where the head of the user meets the dorsal side of the ear in the second direction. The fourth side wall is a side wall facing or touching the region where the head of the user meets the dorsal side of the ear in the second direction, the fifth side wall is a side wall facing or touching the dorsal side of the ear of the user in the third direction, and the sixth side wall is a side wall facing or touching the head of the user in the third direction.

Referring to FIG. 1 to FIG. 3 and FIG.5, the dimensions of the housing assembly 100 in the first direction are set to be larger than the dimensions of the housing assembly 100 in the second direction and the third direction. The third side wall and the fourth side wall are set to be curved surface structures capable of adapting to the physiological structural direction of the region where the dorsal side of the ear meets the head. For a geometric centerline of the housing assembly 100 in the first direction, the geometric centerline is provided as an arcuate segment.

In this way, based on the dimensional differences of the housing assembly 100 in the different directions and the structural form of the side walls, the outer contour of the housing assembly 100 or the main body of the wearable device is constructed as a mimetic structure, to enable the housing assembly 100 or the main body of the wearable device to be adapted to physiological structural morphology between the dorsal side of the ear and the head, so as to be worn on the ear in the form of being clamped or hanging on the ear.

In embodiments in which the housing assembly 100 adopts the mimetic structure, the dimension of the housing assembly 100 in the third direction may be set such that the dimension of the housing assembly 100 in the third direction is progressively decreasing from the side on which the second side wall is located towards the side on which the first side wall is located. For example, the dimension of the first end of the housing assembly 100 in the third direction is smaller than the dimension of the second end in the third direction. As a result, it is possible to make the width dimension of the end of the main body of the wearable device that connects the speaker in the first direction (e.g., the end at which the first interface assembly 500 is located) smaller than the width dimension of the end at which the battery assembly 500 is located, which accommodates the requirements of the battery assembly 500 for the space dimension of the housing assembly 100.

In some embodiments, the housing assembly 100 is made of polyimide (PI), such as a one-piece structure in which both the first housing 110 and the second housing 120 are made of PI, both of which are connected opposite to each other to form the housing assembly 100.

Compared to related technologies in which the outer shell of the wearable device is usually made of polycarbonate (PC), ABS plastic (e.g., a terpolymer formed from the three monomers: acrylonitrile (A), butadiene (B), and styrene (S)), etc., in this embodiment, based on the good biocompatibility, mechanical strength and other characteristics of the PI material, the structural form (including an appearance form) of the housing assembly 100 may be made more stable, and the thickness of the housing wall is thinner, which is conducive to realizing the miniaturization and lightweighting of the wearable device, and enhancing the stability of the overall structure of the housing assembly 100.

In one embodiment, referring to FIG. 2-FIG. 5 and FIG. 7-FIG. 10, the housing assembly 100 includes a first housing 110, and the movement assembly includes a button assembly 400 and a control board assembly 200.

The first housing 110 adopts a housing structure with an opening, and a button window 110g is provided through the housing wall of the first housing 110 to connect the housing space (or the accommodating cavity 100a) of the first housing 110 to the exterior of the first housing 110. For example, the button window 110g is provided through the fifth housing wall 110e of the first housing 110.

The button assembly 400 includes an operating button 410. The operating button 410 is arranged in the housing space of the first housing 110 and is movably connected to the inner wall of the first housing 110. At the same time, at least a portion of the operating button 410 protrudes out of the first housing 110 through the button window. It is also understood that the operating button 410 covers the button window 110g, and at least a portion of the operating button 410 is arranged through the button window 110g and out of the first housing 110.

The control board assembly 200 is provided on a side of the operating button 410 that is opposite to the button window 110g, and the control board assembly 200 is configured with a button switch for cooperating with the operating button 410. The operating button 410 may be configured to press the button switch of the control board assembly 200 by manipulating the operating button 410 to move relative to the first housing 110, and the preset command may be input.

By movably connecting the button assembly 400 with the inner wall of the first housing 110, the first housing 110 may be used directly as a mounting carrier for the button assembly 400 without the aid of other connecting parts, which is not only conducive to fully utilizing the structure and space of the housing assembly 100, but also effectively reduces the configuration number of components (e.g., the internal skeleton) in the wearable device, thereby providing support for realizing lightweight and miniaturized design of the wearable device.

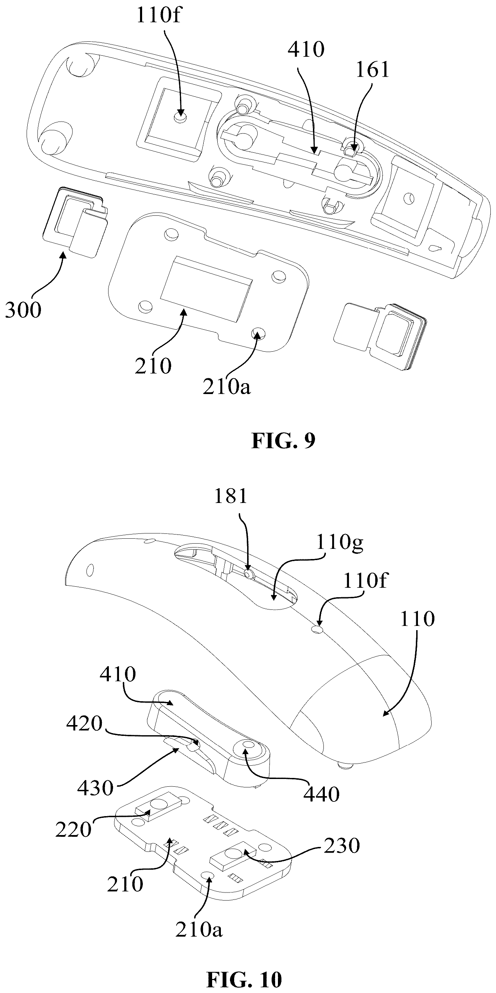

In one embodiment, referring to FIG. 10, the operating button 410 is provided with a pivot structure between the operating button 410 and the first housing 110. The pivot structure is provided between the operating button 410 and the third housing wall 110c, and between the operating button 410 and the fourth housing wall 110d, along the third direction. It is to be appreciated that an axial direction of the pivot structure or a direction in which a rotation axis of the pivot structure is located is the third direction. Two ends of the operating button 410 that are opposite to each other in a radial direction (e.g., the first direction) of the pivot structure are a first end and a second end of the operating button 410, respectively. Correspondingly, the button switch of the control board assembly 200 may be provided at the first end and the second end or a position corresponding to the first end and the second end of the operating button 410.

Therefore, based on the presence of the pivot structure, the operating button 410 is caused to rotate around the pivot structure relative to the first housing 110 by the external force, such that one of the first end and the second end of the operating button 410 protrudes out of the first housing 110 or tilts relative to the first housing 110, and the other of the first end and the second end of the operating button 410 rotates toward a side of the control board assembly 200 to press against and trigger the corresponding button switch, thereby realizing the input of command information.

Exemplarily, referring to FIG. 10, the control board assembly 200 includes a second circuit board 210, a first switch 220, and a second switch 230. The second circuit board 210 is spaced apart on a side of the operating button 410 that is opposite to the button window 110g, and the first switch 220 and the second switch 230 are provided on a side of the second circuit board 210 facing the operating button 410. The first switch 220 corresponds to the first end of the operating button 410, and the second switch 230 corresponds to the second end of the operating button 410.

By pressing the first end of the operating button 410 toward a side where the second circuit board 210 is located, the first end of the operating button 410 may press the corresponding first switch 220 to realize the input of the preset command. In this process, since the operating button 410 is rotated around the pivot structure in a first preset direction (e.g., a counterclockwise direction) relative to the first housing 110, the second end of the operating button 410 may protrude out of an outer surface of the first housing 110 or tilt relative to the first end of the operating button 410.

Conversely, by pressing the second end of the operating button 410 on the side where the second circuit board 210 is located, the second switch 220 is triggered to realize the input of the preset command. In this process, since the operating button 410 rotates about the pivot structure relative to the first housing 110 along a second preset direction (e.g., a clockwise direction) that is opposite to the first preset direction, the first end of the operating button 410 may protrude out of the outer surface of the first housing 110 or tilt relative to the second end of the operating button 410.

In some embodiments, the first end and the second end of the operating button 410 may be arranged symmetrically about the pivot structure, which ensures the smoothness of the rotation of the operating button 410 relative to the first housing 110, and facilitates the identification of the position of the button switch on the control board assembly 200.

In one embodiment, referring to FIG. 10, two pivot structures are provided, and each pivot structure includes a pivot protrusion 181 and a pivot groove 420 that cooperate with each other. The pivot groove 420 is provided on an outer surface of the operating button 410, for example, the operating button 410 is provided on two surfaces that are opposite to each other in the third direction. The pivot protrusion 181 and the first housing 110 are of an integral structure, for example, the pivot protrusion 181 protrudes out of a position of the third housing wall 110c or the fourth housing wall 110d corresponding to the pivot groove 420. It is also to be understood that, on the axial direction of the pivot structures, the two pivot structures are arranged on two opposite sides of the operating button 410.

Certainly, according to the actual need, the pivot protrusion 181 may also protrude out of the surface of the operating button 410, while the pivot groove 420 may be provided on the inner wall of the first housing 110.

By inserting the pivot protrusion 181 into the corresponding pivot groove 420, it is possible to not only connect the operating button 410 to the first housing 110 but also make the operating button 410 equipped for rotation relative to the first housing 110.

In other embodiments, the pivot structure may also adopt other suitable structures. For example, the pivot structure includes a shaft, and the pivot structure is provided with a shaft hole structure at a position of the first housing 110 opposite the operating button 410, i.e., by threading the shaft through the shaft hole structure, a relatively rotatable structural connection between the first housing 110 and the operating button 410 may be established.

In one embodiment, referring to FIG. 10, the operating button 410 is provided with a first limiting structure, which is mainly configured to abut against the first housing 110 at a position where the operating button 410 rotates to a preset limiting angle, thereby limiting the rotation angle of the operating button 410.

Exemplarily, the first limiting structure includes a third limiting flange 430, which is provided in a one-piece molded structure protruding out of the surface of the operating button 410. For example, the third limiting flange 430 is provided on the surfaces of two sides of the operating button 410 that are opposite to each other in the axial (or third) direction of the pivot structure. As another example, the third limiting flange 430 is provided on the surfaces of two sides of the operating button 410 that are opposite to each other in the radial (or first) direction of the pivot structure.

When the operating button 410 is rotated to a certain angular position along the first preset direction or the second preset direction, the operating button 410 may be prevented from rotating by abutting against the inner wall of the first housing 110 (e.g., an inner surface of the fifth housing wall 110e) at an edge of the button window 110g with the aid of the third limiting flange 430.

The limitation of the rotation angle of the operating button 410 by the third limiting flange 430 is utilized. Therefore, on the one hand, by selecting the rotation angle of the operating button 410, it can be ensured that when the operating button 410 rotates to the limiting angle, the first end or the second end of the operating button 410 may completely trigger the corresponding button switch. On the other hand, it can be avoided that the button window 110g is partially opened because all of the first end or the second end of the operating button 410 protrudes out of the first housing 110, which affects the compactness of the overall structure and the integrity of the contour of the device due to the fact that the inner space of the housing assembly 100 is connected to the outside.

In one embodiment, referring to FIG. 10, the third limiting flange 430 is provided protruding out of the surfaces of two sides of the operating button 410 that are opposite to each other in the axial direction of the pivot structure. In the radial direction (e.g., in the second direction) of the pivot structure, the third limiting flange 430 is located on a side of the pivot structure away from the button window 110g. The third limiting flange 430 extends from a position near the pivot structure towards a side where the first end and the second end of the operating button 410 are located.

Thus, the third limiting flange 430 is enabled to adapt to the rotation trajectory of the operating button 410, achieving the effect of limiting the rotation angle of the operating button 410.

In some embodiments, the operating button 410 and the housing assembly 100 are made of a polyimide material, for example, the operating button 410, the first housing 110, and the second housing 120 are one-piece structures made of a polyimide material. This may enable the related parts of the wearable device that are in contact with the human body to have good biocompatibility and stable structural strength.

Referring to FIGs. 1, 2, and 8, the button window 110g is provided through the fifth housing wall 110e of the first housing 110, and the whole fifth housing wall 110e or an outer wall of the fifth housing wall 110e is a curved surface structure protruding in the second direction towards the outer side of the first housing 110. The first end and the second end of the operating button 410 are two ends of the operating button 410 that are opposite to each other in the first direction. As for the control board assembly 200, the plane in which the control board assembly 200 is located is perpendicular to the third housing wall 110c and the fourth housing wall 110d. For example, the plane in which the control board assembly 200 (specifically, the second circuit board 210) is located is parallel to the rotation axis of the operating button 410 or the axis of the pivot structure.

In this way, based on the characteristics of the curved surface structure of the first housing 110, structural support may be provided for the first end and the second end of the operating button 410 to protrude out of the first housing 110, thereby facilitating the user to accurately and quickly recognize the position of the operating button 410 on the first housing 110, thus conveniently and quickly pressing the operating button 410.

Considering the curved surface structure adopted by the fifth housing wall 110e, and the plane where the control board assembly 200 (specifically, the second circuit board 210) is located is usually parallel to the rotation axis of the operating buttons 410 or the axis of the pivot structure, it may be difficult to maintain a consistent height of the first end and the second end of the operating button 410 protruding out of the first housing 110 (i.e., the outer wall of the fifth housing wall 110e), and may be easy to compromise the operating experience of the button assembly 400 and generate problems such as erroneous operations.

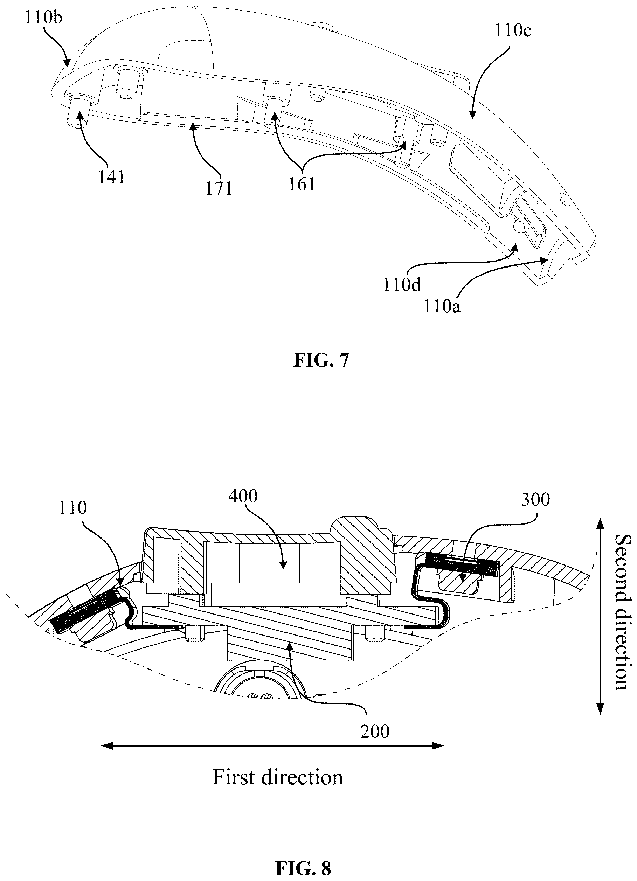

In some embodiments, referring to FIG. 8 and FIG. 10, when the wearable device is in a worn state, the first end of the operating button 410 may be understood to be a relatively lower end of the operating button 410 in the first direction or in the up-down direction of the user. The button protrusion 440 is provided on the outer surface of the first end of the operating button 410 protruding toward the exterior of the first housing 110, for example, the button protrusion 440 protrudes out of the outer surface of the first end of the operating button 410 in the second direction.

Thus, with the aid of the button protrusion 440, not only the height difference between the two ends of the operating button 410 relative to the outer surface of the first housing 110 (i.e., the outer wall of the fifth housing wall 110e) may be adjusted or compensated for, to achieve the purpose of enhancing the operating experience, but also the risk of erroneous operations of the operating button 410 is reduced.

In other embodiments, the button protrusion 440 may also be provided protruding out of the second end of the operating button 410, or the first end and the second end of the operating button 410 may be provided in different structural forms. This may also serve to enhance the operating experience and reduce the risk of erroneous operations, thereby meeting the requirements for different types of operations.

In one embodiment, referring to FIGs. 7 and 9, the inner surface of the first housing 110 (specifically, the fifth housing wall 110e) is provided with a first fixing structure, which is primarily configured to support and fix the second circuit board 210 at a preset position within the housing space of the first housing 110 to limit the fixing of the control board assembly 200 to the side of the button assembly 400 away from the button window 110 in the third direction.

Exemplarily, referring to FIG. 7 and FIG. 9, the first fixing structure includes a plurality of support posts 161 protruding out of the fifth housing wall 110e, and the plurality of support posts 161 are spaced apart around the geometric centerline of the second circuit board 210. Accordingly, a position of the second circuit board 210 corresponding to the support posts 161 is provided with a positioning through-hole 210a. The support posts 161 are inserted in the positioning through-hole 210a, thus the second circuit board 210 or the control board assembly 200 may be supported and fixed to the first housing 110 by spacing apart from and facing the inner surface of the fifth housing wall 110e.

As a result, a certain structural gap may be formed between the second circuit board 210 and the inner wall of the first housing 110 (e.g., the inner wall of the fifth housing wall 110e) by the first fixing structure (e.g., the support post 161), so as to provide a structural space for the button assembly 400 to be assembled in the first housing 110. For example, the second circuit board 210 may be transversely within the housing space of the first housing along the third direction (or the width direction of the main body of the wearable device) (it may also be understood that a plane where the second circuit board 210 is located in a plane substantially perpendicular to the third housing wall 110c and the fourth housing wall 110d), thereby utilizing the structural gap between the second circuit board 210 and the fifth housing wall 110e as a structural mounting space as well as an active space for the button assembly 400. This is convenient for controlling the overall width and thickness dimensions of the main body of the wearable device, as well as facilitating the step-by-step fixing and assembly of the button assembly 400 and the control board assembly 200 in the first housing 110.

In other embodiments, the first fixing structure may also adopt other suitable structural forms. For example, the support post 161 may protrude out of the second circuit board 210, and a slot structure for the insertion and fixing of the support post 161 is provided on the inner wall surface of the first housing 110, which will not be discussed herein.

In one embodiment, referring to FIGs. 4-6 and combining with FIGs. 9 and 10, a second limiting structure is also provided between the first housing 110 and the second housing 120. On the one hand, the second limiting structure may restrict the relative position of the first housing 110 and the second housing 120 and enhance the strength of the structural connection between the first housing 110 and the second housing 120. On the other hand, the second limiting structure may prevent the first housing 110 and the second housing 120 from generating a structural deformation at the point where the first housing 110 and the second housing 120 meet each other, so as to avoid extrusion of the control board assembly 200 (specifically, the second circuit board 210) due to the structural deformation of the housing.

Exemplarily, referring to FIG. 4-FIG. 6, the first housing 110 and the second housing 120 adopts a housing structure, and surfaces where the first housing 110 connects against the second housing 120 in the second direction are defined as joint surfaces. A joint surface of the first housing 110 is provided with a first limiting flange 171 protruding toward the second housing 120 substantially in the second direction, and a joint surface of the second housing 120 is provided with a second limiting flange 172 protruding toward the first housing 110 substantially in the second direction.

With respect to the assembled and molded state of the housing assembly 100, the first limiting flange 171 is provided on a side of the second limiting flange 172 that is opposite to the accommodating cavity 100a in the third direction (e.g., the first limiting flange 171 is provided on the outside of the accommodating cavity 100a using the accommodating cavity 100a as a reference datum).

By means of the second limiting flange 172 abutting the first limiting flange 171 from the inner side of the holding cavity 100a, the second limiting structure is formed, which may not only prevent the first housing 110 from shrinking and deforming in the third direction at the opening due to the influence of the properties of the material, thereby preventing extrusion of the control board assembly 200 (specifically, the second circuit board 210). At the same time, the structural connection strength between the first housing 110 and the second housing 120 at the joint surface may also be enhanced, reducing or eliminating the structural gap between the first housing 110 and the second housing 120 to ensure the integrity of the overall contour of the housing assembly 100.

In some embodiments, the second limiting structure may also be arranged in other structural forms between the joint surface of the first housing 110 and the joint surface of the second housing 120. For example, a flange is provided on the joint surface of the second housing 120, and a slot is provided on a position of the joint surface of the first housing 110 corresponding to the flange, and the flange is aligned and inserted in the slot to form the second limiting structure, which prevents the first housing 110 from deformation in the third direction, so as to prevent the first housing 110 from squeezing the first assembly (e.g., the control board assembly 200).

In some embodiments, the second limiting structure may include a flange and a slot, and the flange and the slot are provided at the joint surfaces of the first housing 110 and the second housing 120 at the same time. By utilizing the structural relationship in which the flange and slot are provided in a one-to-one correspondence, the first housing 110 and the second housing 120 may be prevented from being connected to each other, so as to protect the first assembly and the second assembly from being extruded by the housing.

In one embodiment, referring to FIG. 4 to FIG. 6, there are a plurality of groups of second limiting structures, and the plurality of groups of second limiting structures are arranged on two sides of the holding cavity 100a that are opposite to each other in the third direction. For example, on two sides of the second circuit board 210 that are opposite to each other in the third direction. Such a setting has the effect of further preventing the first housing 110 from deformation, and is also conducive to the stability of the structural connection between the first housing 110 and the second housing 120.

Certainly, the second limiting structure may also be spaced apart around the second direction, so as to have a limiting effect on the deformation of the housing from the third direction, the first direction, and the other directions, to ensure that the joint surfaces of the first housing 110 and the second housing 120 may be stabilized against each other.

In one embodiment, referring to FIG. 4 to FIG. 6, the second limiting structure is further provided with a second avoidance notch 173. During assembly of the first housing 110 and the second housing 120, with the aid of the second avoidance notch 173, a portion of the first assembly or the second assembly may be avoided, to adapt to the spatial dimensions required by the first assembly or the second assembly for the accommodating cavity 100a.

Exemplarily, the first limiting flange 171 is located on the side of the second limiting flange 172 that is opposite to the accommodating cavity 100a in the third direction, and the second avoidance notch 173 may be a notch provided on the second limiting flange 172, or may be a notch provided on a surface of a side of the second limiting flange 172 facing the accommodating cavity 100a, or may be a structural gap between two adjacent second limiting flanges 172 in the first direction.

Using the second avoidance notch 173 during assembly of the first housing 110 and the second housing 120 may enable the second housing 120 to adapt to the contour dimensions of the second circuit board 210 to avoid or accommodate a portion of the second circuit board 210 toward the exterior of the housing assembly 100 in the third direction. This not only ensures that the joint surfaces of the first housing 110 and the second housing 120, as well as the first limiting flange 171 and the second limiting flange 172, may effectively abut against each other, but also avoids structural extrusion or structural interference with the control board assembly 200, or the like.

The above specific examples applied to illustrate the present disclosure are only used to assist in understanding the present disclosure and are not intended to limit the present disclosure. For a person skilled in the art to which the present disclosure belongs, various simple deductions, deformations, or substitutions may also be made based on the ideas of the present disclosure.

## Claims

1. A wearable device, comprising:
a housing assembly, including a first housing, wherein the first housing is provided with a housing space and a button window, and the button window is connected to the housing space; and
a button assembly, including an operating button, wherein the operating button is provided in the housing space and movably connected to an inner wall of the first housing; and at least a portion of the operating button protrudes out of the first housing through the button window.

2. The wearable device of claim 1, further comprising a pivot structure provided between the operating button and the first housing, wherein the operating button includes a first end and a second end opposite to each other in a radial direction of the pivot structure, and
the operating button is capable of rotating about the pivot structure relative to the first housing by an external force to cause one of the first end and the second end of the operating button to protrude out of the first housing through the button window.

3. The wearable device of claim 2, wherein the pivot structure includes a pivot protrusion and a pivot shaft hole, the pivot protrusion protrudes out of one of a surface of the operating button and the inner wall of the first housing, the pivot shaft hole is provided on another of the surface of the operating button and the inner wall of the first housing, and the pivot protrusion is rotatably inserted in the pivot shaft hole.

4. The wearable device of claim 3, wherein two pivot structures are provided; and
in an axial direction of the two pivot structures, the two pivot structures are provided on two opposite sides of the operating button.

5. The wearable device of claim 2, wherein the first end and the second end of the operating button are symmetrical about the pivot structure.

6. The wearable device of claim 2, wherein the operating button is provided with a first limiting structure; and
the first limiting structure is configured to abut against the first housing to limit a rotation angle of the operating button.

7. The wearable device of claim 6, wherein the first limiting structure includes a third limiting flange, and the third limiting flange protrudes out of surfaces of two sides of the operating button opposite to each other in an axial direction of the pivot structure.

8. The wearable device of claim 7, wherein the third limiting flange is located on a side of the pivot structure away from the button window in the radial direction of the pivot structure, and the third limiting flange extends from a position close to the pivot structure toward a side where the first end and the second end of the operating button are located.

9. The wearable device of claim 2, wherein the first housing has a first housing wall, a second housing wall, a third housing wall, a fourth housing wall, and a fifth housing wall, wherein
the first housing wall and the second housing wall are opposite to each other in a first direction;
the third housing wall and the fourth housing wall are opposite to each other in a third direction and connected between the first housing wall and the second housing wall;
the fifth housing wall is connected with an end of the first housing wall, an end of the second housing wall, an end of the third housing wall, and an end of the fourth housing wall in a second direction to enclose the housing space of the first housing;
any two of the first direction, the second direction, and the third direction intersect;
the button window is provided through the fifth housing wall; and
the pivot structure is provided between the operating button and the third housing wall and/or between the operating button and the fourth housing wall along the third direction.

10. The wearable device of claim 9, further comprising a control board assembly located in the housing space, wherein the control board assembly is located on a side of the button assembly away from the button window in the second direction; and the first end and/or the second end of the operating button is configured to press the control board assembly to input a preset command.

11. The wearable device of claim 10, wherein the control board assembly includes a second circuit board, a first switch, and a second switch, the second circuit board and the operating button are opposite to each other, and the first switch and the second switch are provided on a side of the second circuit board facing the operating button; and
when the operating button is rotated around the pivot structure in a first preset direction, the first end of the operating button is configured to press the first switch;
when the operating button is rotated around the pivot structure in a second preset direction that is opposite to the first preset direction, the second end of the operating button is configured to press the second switch.

12. The wearable device of claim 11, wherein the first housing is provided with a first fixing structure on the inner wall of the first housing; the first fixing structure is fixedly connected to the second circuit board to limit and fix the control board assembly to the side of the button assembly away from the button window.

13. The wearable device of claim 12, wherein the first fixing structure includes a support post protruding out of an inner wall of the fifth housing wall, a position of the second circuit board corresponding to the support post is provided with a positioning through-hole, and the support post penetrates the positioning through-hole and is fixed to the second circuit board to maintain a preset distance between the inner wall of the fifth housing wall and the second circuit board in the second direction.

14. The wearable device of claim 9, wherein an outer wall of the fifth housing wall is a curved structure protruding towards an outer side of the first housing in the second direction, and the first end and the second end of the operating button are two ends of the operating button that are opposite to each other in the first direction.

15. The wearable device of claim 14, wherein the first end or the second end of the operating button is provided with a button protrusion protruding out of the first housing via the button window.

16. The wearable device of any one of claims 1-15, wherein the housing assembly further includes a second housing; the first housing is connected to the second housing to enclose the housing space into an accommodating cavity that at least accommodates the button assembly, wherein one or more of the first housing, the second housing, and the operating button is a one-piece structure made of polyimide.

17. The wearable device of claim 16, wherein the housing assembly includes a first end and a second end that are opposite to each other, a second fixing structure and a first positioning structure are provided between the first housing and the second housing, the second fixing structure is located on the first end of the housing assembly, and the first positioning structure is located on the second end of the housing assembly, wherein
the second fixing structure includes a support arm and a fixing pin, one of the first housing and the second housing is of a one-piece structure with the support arm, and the fixing pin is provided through another of the first housing and the second housing; and
the first positioning structure includes a first positioning protrusion and a first positioning groove, one of the first housing and the second housing is of a one-piece structure with the first positioning protrusion, the first positioning groove is provided in another of the first housing and the second housing, the first positioning protrusion is capable of being aligned and inserted in the first positioning groove to limit a relative position of the first housing and the second housing.

18. The wearable device of any one of claims 1-17, further comprising an in-ear speaker, wherein the in-ear speaker includes a speaker assembly and a wearable assembly, and the wearable assembly is connected between the housing assembly and a speaker assembly; and
the housing assembly is capable of being worn between a dorsal side of an ear of a user and the head of the user, and the speaker assembly is capable of being inserted within an ear canal of the user.

19. The wearable device of any one of claims 1-18, wherein the wearable device is an air-conduction hearing aid.
